(19) **Europäisches Patentamt**

**European Patent Office**

**Office européen des brevets**

(11) **EP 1 231 186 A1**

(12) **EUROPEAN PATENT APPLICATION**
published in accordance with Art. 158(3) EPC

(43) Date of publication:
**14.08.2002 Bulletin 2002/33**

(51) Int Cl.⁷: **C01G 23/07**

(21) Application number: **00955066.6**

(86) International application number:
**PCT/JP00/05794**

(22) Date of filing: **28.08.2000**

(87) International publication number:
**WO 01/16027 (08.03.2001 Gazette 2001/10)**

(84) Designated Contracting States:
**AT BE CH CY DE DK ES FI FR GB GR IE IT LI LU MC NL**
Designated Extension States:
**AL LT LV MK RO SI**

(30) Priority: **30.08.1999 JP 24353999**
**15.09.1999 US 153957 P**

(71) Applicant: **SHOWA DENKO K.K.**
**Tokyo 105-8518 (JP)**

(72) Inventors:
• **Tanaka, Jun, Showa Titanium Co., Ltd.**
**Toyama-shi, Toyama 931-8577 (JP)**
• **Kayama, Susumu, Showa Titanium Co., Ltd.**
**Toyama-shi, Toyama 931-8577 (JP)**
• **Tomikawa, Shin-ichiro, Showa Denko K.K.**
**Tokyo 105-8518 (JP)**

(74) Representative: **Strehl Schübel-Hopf & Partner**
**Maximilianstrasse 54**
**80538 München (DE)**

(54) **TITANIUM OXIDE PARTICLES AND METHOD FOR PRODUCTION THEREOF**

(57) Fine particulates of titanium oxide having a BET specific surface area of from 3 m²/g to 200 m²/g are obtained using a vapor phase process of producing titanium oxide by oxidizing titanium tetrachloride with an oxidizing gas at a high temperature, wherein a titanium tetrachloride-containing gas and an oxidizing gas are supplied and reacted in a reaction tube after each gas is preheated to 500°C or more. The fine particulates of titanium oxide exhibit little aggregation and have highly excellent dispersibility.

Fig.1

TITANIUM TETRACHLORIDE (OR DILUTED WITH NITROGEN)

OXYGEN AND STEAM

COOLING AIR

TITANIUM OXIDE

EP 1 231 186 A1

**Description**

CROSS REFERENCE TO THE RELATED APPLICATIONS

This is an application based on the prescription of 35 U.S.C. Article 111(a) and claiming the benefit of the filing date of U.S. provisional application Serial No. 60/153,957 filed on September 15, 1999 under the provision of 35 U.S.C. 111(b), pursuant to 35 U.S.C. Article 119(e) (1).

BACKGROUND OF THE INVENTION

FIELD OF THE INVENTION

The present invention relates to particulates obtained by a vapor phase process, particularly fine particulates of titanium oxide, and a production process therefor. Moreover, the present invention relates to ultrafine particulates of titanium oxide obtained from a starting material of titanium tetrachloride, which particulates contain few aggregated particles and have excellent dispersibility. The present invention also relates to a production process of producing such particulates.

DESCRIPTION OF THE RELATED ART

Fine particulates of titanium oxide, particularly ultrafine particulates of titanium oxide, have very wide application areas in the industrial field and have diversified uses include an ultraviolet-shielding material, an additive to silicone rubber, a photocatalyst and the like. In the Japanese Industrial Standards (JIS) "titanium oxide" is referred to as "titanium dioxide" but the term "titanium oxide" is used as a common name. Accordingly, this simple term "titanium oxide" is hereinafter used in the present invention.

The importance of titanium oxide is increasing in the use for shielding from ultraviolet light, for example, in the field of cosmetics, clothing and the like. As a shielding material, ultrafine particulates of titanium oxide are being used, in many cases, because of their high safety. For the shielding, the two functions of absorbing and scattering the ultraviolet rays are necessary. The ultrafine particulates of titanium oxide exhibit both of these two functions.

The titanium oxide has a property of absorbing ultraviolet rays at a wavelength of about 400 nm or less to excite electrons. When the electrons and the holes generated in the fine particulate titanium oxide reach the surface of particulates, they combine with oxygen or water to generate various radical species. The radical species have an action of decomposing organic materials and therefore, in the case of using titanium oxide in cosmetics and the like, the ultrafine particulates of titanium oxide are generally surface-treated in advance. The fine particulates of titanium oxide are also used for making use of the photocatalytic reaction resulting from photoexcitation of titanium oxide. Furthermore, where titanium oxide is used for scattering ultraviolet rays, ultrafine particulates of titanium oxide having a primary particle size of about 80 nm are used. Although ultrafine particulates in general are not strictly defined with respect to the primary particle size, fine particles having a primary particle size of 0.1 μm or less are usually called ultrafine particles (particulates).

Titanium oxide is generally produced using a liquid phase process where titanium tetrachloride or titanyl sulfate as a starting material is hydrolyzed in a hydrophilic solvent or a vapor phase process where a volatile starting material such as titanium tetrachloride is vaporized and then reacted in the gas state with an oxidizing gas such as oxygen or steam at a high temperature. For example, JP-A-1-145307 discloses a method of producing ultrafine spherical particulates of metal oxide by setting the flow rate of either one of a volatile metal oxide and steam at 5 m/sec or more.

In general, the titanium oxide powder produced by the liquid phase process disadvantageously undergoes heavy aggregation. Accordingly, on use of titanium oxide in cosmetics and the like, the titanium oxide must be strongly cracked or pulverized and as a result, there arise problems such as mingling of abraded materials attributable to the pulverization treatment or the like, non-uniform distribution of the particle size, or a poor touch feeling.

In the case of titanium oxide produced by the vapor phase process, the same problems as in the production by the liquid phase process will arise. That is, although ultrafine particulates of titanium oxide may be obtained by the conventional vapor phase process, only particulates of titanium oxide which have undergone grain growth can be obtained, so that, to obtain ultrafine particulates of titanium oxide, the titanium oxide must be strongly cracked or pulverized.

SUMMARY OF THE INVENTION

The present invention has been made to solve these problems and an object of the present invention is to provide fine particulates, particularly ultrafine particulates, of titanium oxide which undergo considerably reduced aggregation and have highly excellent dispersibility.

Another object of the present invention is to provide a production process of producing such fine particulates of titanium oxide.

As a result of extensive investigations with view to solving the above-described problems, the present inventors have found that, in the vapor phase process, preheating each starting material gas can give rise to fine particulates of titanium having very excellent dispersibility.

More specifically, the process of producing titanium oxide of the present invention is characterized in that, in the vapor phase process for producing titanium oxide by oxidizing titanium tetrachloride with an oxidizing gas at a high temperature, a titanium tetrachloride-containing gas and an oxidizing gas are reacted by supplying each gas into a reaction tube, after preheating each gas to 500°C or more, to produce fine particulates of titanium oxide having a BET specific surface area of from 3 $m^2/g$ to 200 $m^2/g$, preferably 5 $m^2/g$ to 200 $m^2/g$, and more preferably 10 $m^2/g$ to 200 $m^2/g$.

In the process, the preheated titanium tetrachloride-containing gas and the oxidizing gas may be supplied to a reaction tube each at a flow rate of 10 m/sec or more.

In the process, the titanium tetrachloride-containing gas and the oxidizing gas may be reacted by supplying these gases into a reaction tube and allowing them to stay there for 3 seconds or less, preferably 1 second or less, and more preferably 0.5 second or less, under a high temperature condition such that the temperature inside the reaction tube exceeds 600°C.

The production process of fine particulates of titanium oxide of the present invention is characterized in that, in the vapor phase process for producing titanium oxide by oxidizing titanium tetrachloride with an oxidizing gas at a high temperature, a titanium tetrachloride-containing gas and an oxidizing gas are each preheated to 500°C or more, the preheated titanium tetrachloride-containing gas and the preheated oxidizing gas are each supplied to a reaction tube at a flow rate of 10 m/sec or more, and these gases are reacted by allowing them to stay in the reaction tube at an average flow rate of 5 m/sec or more for 3 seconds, preferably 1 second or less, and more preferably 0.5 second or less, under a high temperature condition such that the temperature inside the reaction tube exceeds 600°C.

In this production process, preferably, after each of the titanium tetrachloride-containing gas and the oxidizing gas is preheated to 500°C or more, the preheated titanium tetrachloride-containing gas and the preheated oxidizing gas are supplied into the reaction tube to generate turbulence in the reaction tube.

In this process, the titanium tetrachloride-containing gas and the oxidizing gas may be supplied into a reaction tube through a coaxial parallel flow nozzle and the inner tube of the coaxial parallel flow nozzle may have an inside diameter of 50 mm or less.

In this process, the titanium tetrachloride-containing gas may contain from 10 to 100% of titanium tetrachloride.

In this process, the titanium tetrachloride-containing gas and the oxidizing gas each may be preheated to a temperature of 800°C or more.

The fine particulates of titanium oxide of the present invention are characterized by having a BET specific surface area of from 3 $m^2/g$ to 200 $m^2/g$, preferably from 5 $m^2/g$ to 200 $m^2/g$, and more preferably from 10 $m^2/g$ to 200 $m^2/g$, and a diameter corresponding to 90% of the particle size cumulative distribution on a weight basis as D90 diameter, of 2.2 $\mu$m or less.

The fine particulates of titanium oxide of the present invention are characterized by having a BET specific surface area of from 3 $m^2/g$ to 200 $m^2/g$, preferably from 5 $m^2/g$ to 200 $m^2/g$, and more preferably from 10 $m^2/g$ to 200 $m^2/g$, and a distribution constant n according to the following Rosin-Rammler formula of 1.7 or more:

$$R = 100exp(-bD^n)$$

wherein D is a particle diameter and b is a constant.

The fine particulates of titanium oxide of the present invention can be produced by any one of the above-described processes.

The fine particulate titanium oxide composition of the invention is characterized by containing at least one of the above titanium oxides.

The above and other objects, effects, features and advantages of the present invention will become more apparent from the following description of preferred embodiments with reference to the attached drawings.

BRIEF DESCRIPTION OF THE DRAWINGS

Fig. 1 is a schematic view showing a reaction tube equipped with a coaxial parallel flow nozzle.

Fig. 2 is a TEM photograph of titanium oxide obtained in Example 2.

BEST MODES OF CARRYING OUT THE INVENTION

The fine particulates of titanium oxide of the present invention are produced by a vapor phase process starting from a gas containing titanium tetrachloride, where the gas is oxidized using oxygen, steam or a mixed gas thereof (hereinafter referred to as an "oxidizing gas") at a high temperature. Here, the titanium tetrachloride-containing gas and the oxidizing gas must each be preheated to 500°C or more.

In the present invention, the titanium tetrachloride-containing gas and the oxidizing gas are preferably introduced into a reaction tube at respective flow rates of 10 m/sec or more, more preferably 30 m/sec or more. Furthermore, these gases are preferably reacted by allowing these gases to stay in the reaction tube under a high temperature condition and react for a time of 3 seconds or less, more preferably 1 second or less, particularly preferably 0.5 second or less (hereinafter, the time being referred to as "high temperature residence time"). The fine titanium oxide particulate produced in such a way has very excellent dispersibility and a BET specific surface area of from 3 to 200 $m^2/g$, particularly from 5 to 200 $m^2/g$, and more particularly from 10 to 200 $m^2/g$.

Titanium oxide particles heretofore produced by the vapor phase processes had BET specific surface areas of less than 10 $m^2/g$, respectively.

In the present invention, a particle size distribution measured by a laser diffraction-type particle size measuring process is used as an index of dispersibility. The procedure in the measurement of particle size distribution is described below.

To a slurry, obtained by adding 50 ml of pure water and 100 μl of a 10% aqueous sodium hexametaphosphate solution to 0.05 g of titanium oxide, ultrasonic wave (46 KHz, 65 W) was applied for 3 minutes. Then, this slurry was measured of particle size by a laser diffraction-type particle size analyzer (SALD-2000J, manufactured by Shimadzu Corporation). It can be said that when the thus-measured D90 diameter (i.e., a diameter corresponding to 90% of the particle size cumulative distribution on a weight basis) is small, good dispersibility in a hydrophilic solvent is attained.

The fine particulates of titanium oxide of the present invention have excellent uniformity in grain size. In the present invention, the uniformity in grain size is specified by a distribution constant (n) obtained using the Rosin-Rammler formula. The Rosin-Rammler formula is briefly described below. Details thereof are described in Ceramic Kouaku Handbook (Ceramic Engineering Handbook), compiled by Nippon Ceramics Kyokai, 1st ed., pages 596 to 598.

The Rosin-Rammler formula is represented by the following formula (1):

$$R = 100\exp(-bD^n) \qquad (1)$$

wherein D is a particle diameter, b is a constant, R is a percentage of the number of particles larger than D (particle diameter) to the total number of particles, and n is a distribution constant.

Assuming that $b = 1/De^n$, the formula (1) is rewritten as follows:

$$R = 100\exp\{-(D/De)^n\} \qquad (2)$$

wherein De is a viscosity characteristic number and n is a distribution constant. In formula (1) above, the constant b is a constant derived from a viscosity characteristic number, De, i.e., the particle diameter corresponding to an over particle diameter of 36.8% (R=1/e=0.368), and a distribution constant, n, according to the formula: $b=1/De^n$.

From formula (1) or (2), the following formula (3) is obtained:

$$\log\{\log(100/R)\} = n\log D + C \qquad (3)$$

wherein C is a constant. From formula (3), the relationship between logD and log{log(100/R)} is plotted on the Rosin-Rammler (RR) chart where logD is graduated on the x axis and log{log(100/R)} on the y axis. Then, a nearly straight line is obtained. The gradient (n) of this straight line indicates the degree of uniformity of the grain size. It can be said that when the numerical value of n becomes larger, the uniformity of grain size becomes higher.

The fine particulates of titanium oxide of the present invention preferably have a diameter corresponding to 90% of the particle size cumulative distribution on a weight basis as termed D90 diameter, of 2.2 μm or less and a distribution constant n by the Rosin-Rammler formula of 1.7 or more.

The fine particulates of titanium oxide of the present invention may be contained as a pigment or a particle component using the photocatalytic effect in various compositions. More specifically, the fine particulates of titanium oxide of the present invention may be used as an additive in various products such as cosmetics, clothes, ultraviolet light-shielding materials and silicone rubber.

The process of producing titanium oxide is described below.

A general production process for titanium oxide using a vapor phase process is known, where titanium tetrachloride is oxidized using an oxidizing gas such as oxygen or steam under the reaction condition of about 1,000°C and thereby fine particulates of titanium oxide are obtained.

The growing mechanism of particulates in the vapor phase process is roughly classified into two types. One is CVD (chemical vapor deposition) and another is the growth by collision (coalescence) and sintering of particles. In either case, the growth time must be short so as to obtain ultrafine particulates of titanium oxide, which is an object of the present invention. More specifically, in the former growth, the growth may be prevented by elevating the preheating temperature to thereby increase the chemical reactivity (reaction rate). In the latter growth, cooling, dilution or the like is swiftly applied to the particulates after the completion of CVD to thereby reduce the high-temperature residence time as much as possible, so that the growth by sintering and the like can be prevented.

According to the present invention, it has been found that in the vapor phase process where titanium oxide is produced by oxidizing a titanium tetrachloride-containing gas with an oxidizing gas at a high temperature, preheating both the titanium tetrachloride-containing gas and the oxidizing gas to 500°C or more can prevent CVD growth so that fine particulates of titanium oxide having a BET specific surface area of from 3 to 200 $m^2/g$ can be obtained.

The fine particulates of titanium oxide of the present invention comprise indefinite-shaped or aspheric particles and differ from the spherical particulate disclosed in JP-A-1-145307 referred to in the item "Background Art" (see the photograph by a transmission electron microscope of titanium oxide particulate obtained in Example 2).

The starting material gas containing titanium tetrachloride preferably has a titanium tetrachloride gas concentration of from 10 to 100% by volume, more preferably from 20 to 100% by volume. By using a gas having a titanium tetrachloride concentration of 10% by volume or more, a large number of uniform nuclei are generated and also the reactivity increases, so that formation of particles under the control of CVD growth can hardly occur and particulates having a narrow particle size distribution can be obtained.

The gas for diluting the titanium tetrachloride in the titanium tetrachloride-containing gas must be selected from those non-reactive with titanium tetrachloride and also incapable of being oxidized. Specific examples of the preferred diluting gas include nitrogen and argon.

The temperatures at which the preheating of titanium tetrachloride-containing gas and that of oxidizing gas are performed may be the same or different but each must be 500°C or more, preferably 800°C or more. However, a preheating temperature difference between respective gases may be selected freely in the range of 300°C or less depending on particle size to be obtained although lower preheating temperature differences are preferred. If the preheating temperature is less than 500°C, the generation of uniform nuclei is prevented and the reactivity is low, so that the resulting particulates will have a broad particle size distribution. On the other hand, it is sufficient for the preheating temperature to be the same as or lower than the reaction temperature described hereinbelow.

The titanium tetrachloride-containing gas and the oxidizing gas are introduced into a reaction tube at respective flow rates of preferably 10 m/sec or more. By increasing the flow rates, mixing of two gases is accelerated. When the temperature at the introduction of gases into a reaction tube is 500°C or more, the reaction is completed at the same time as the mixing, so that the generation of uniform nuclei can be increased and the zone where the formation of particles under the control of CVD growth occurs can be shortened.

In the present invention, it is preferred that the starting material gas be introduced into a reaction tube so as to attain thorough mixing of the gases introduced into the reaction tube. As long as the gases are thoroughly mixed, the fluid state of gas within the reaction tube is not particularly limited. For example, a fluid state causing turbulence is preferred. Also, a spiral vortex may be present therein. The presence of the above-described preheating temperature difference is convenient since under such a condition, turbulence or spiral vortex can occur in the gas introduced into the reaction tube.

The inlet nozzle for introducing the starting material gas into the reaction tube may be a nozzle for giving a coaxial parallel flow, an oblique flow or a cross flow. However, the present invention is by no means limited thereto. A coaxial parallel flow nozzle is generally preferred in view of the design because the structure is simple, though it is inferior to some extent in the mixing degree to the nozzles capable of giving an oblique flow or a cross flow.

For example, in the case of a coaxial parallel flow nozzle, the titanium tetrachloride-containing gas is introduced through the inner tube. In this case, the inner tube preferably has a diameter of 50 mm or less from the standpoint of mixing the gases.

In the present invention, the gases introduced into the reaction tube flow preferably at a high flow rate within the reaction tube so as to attain complete mixing. The flow rate is preferably 5 m/sec or more in terms of the average flow rate. When the gas flow rate within the reaction tube is 5 m/sec or more, thorough mixing can be attained in the reaction tube. Moreover, the generation of particles under the control of CVD growth is reduced and the particulate produced is prevented from having a broad particle size distribution.

The reaction within the reaction tube is an exothermic reaction and the reaction temperature is higher than the sintering temperature of ultrafine particulates of titanium oxide produced. Therefore, although the heat is released from the reactor, sintering of the produced fine particulates of titanium oxide proceeds and grown particulates results unless the particulates are rapidly cooled after the reaction. In the present invention, it is preferred to set the high-temperature residence time within the reaction tube in excess of 600°C to 3 seconds or less, preferably 1 second or less, more preferably 0.5 second or less and to rapidly cool the particulate after the reaction.

For rapidly cooling the particulates after the reaction, a large amount of cooling air or a gas such as nitrogen may be introduced into the reaction mixture or water may be sprayed thereon.

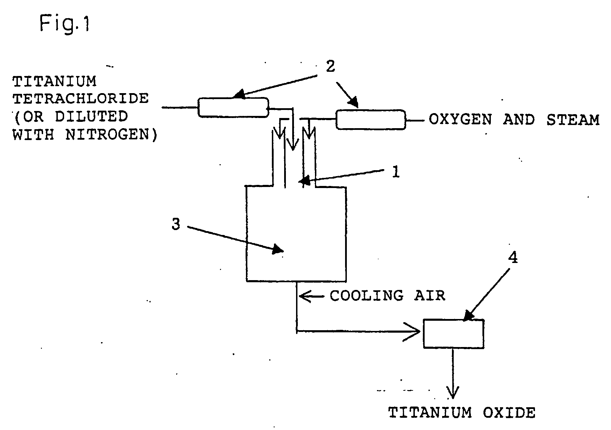

Fig. 1 shows a schematic view of a reaction tube equipped with a coaxial parallel flow nozzle for use in the production of titanium oxide according to the present invention. The titanium tetrachloride-containing gas is preheated to a predetermined temperature by a preheating unit 2 and is then introduced into a reaction tube 3 through an inner tube of the coaxial parallel flow nozzle part 1. The oxidizing gas is preheated to a predetermined temperature by the preheating unit 2 and introduced into the reaction tube 3 through an outer tube of the coaxial parallel flow nozzle part 1. In the present invention, the temperatures of the preheating units 2 may be the same or different. The gases introduced into the reaction tube 3 are mixed and reacted, thereafter rapidly cooled by a cooling gas and then sent to a bag filter 4 where the ultrafine titanium oxide particulate is collected.

EXAMPLES

The present invention is described in greater detail by referring to the Examples, however, the present invention should not be construed as being limited thereto.

<Example 1>

A gas containing 11.8 $Nm^3$/hr (N means normal temperature and pressure, i.e., 0°C, 760 mmHg, hereinafter the same) of gaseous titanium tetrachloride in a concentration of 100% and a mixed gas containing 8 $Nm^3$/hr of oxygen and 20 $Nm^3$/hr of steam were preheated each to 1,000°C and then introduced into a reaction tube at flow rates of 49 m/sec and 60 m/sec, respectively, through a coaxial parallel flow nozzle. Here, the reaction was performed in a reaction tube as shown in Fig. 1, the coaxial parallel flow nozzle had an inner tube diameter of 20 mm, and the titanium tetrachloride-containing gas was introduced through the inner tube.

The reaction tube had an inside diameter of 100 mm and the flow rate within the reaction tube at a reaction temperature of 1,320°C was 10 m/sec as a calculated value. After the reaction, cooling air was introduced into the reaction tube so that the high-temperature residence time in the reaction tube would be 0.3 second or less. Thereafter, the particulates of powder produced were collected using a Teflon-made bag filter.

The fine particulates of titanium oxide obtained had a BET specific surface area of 14 $m^2$/g. Furthermore, measurement of the fine particulates of titanium oxide obtained on the particle size distribution by a laser diffraction-type particle size distribution measuring method indicated that the diameter corresponding to 90% of the particle size cumulative distribution on a weight basis as termed D90 diameter was 0.8 μm. The n value according to the Rosin-Rammler formula was 2.8. The n value was obtained by plotting three-point data D10, D50 and D90 obtained in the laser diffraction on the RR chart as R = 90%, 50% and 10%, respectively, and determined from an approximate straight line drawn on these 3 points.

<Example 2>

A titanium tetrachloride-containing gas obtained by mixing 8.3 $Nm^3$/hr of gaseous titanium tetrachloride and 6 $Nm^3$/hr of nitrogen and an oxidizing gas obtained by mixing 4 $Nm^3$/hr of oxygen and 15 $Nm^3$/hr of steam were preheated to 800°C and 900°C, respectively, and introduced into a reaction tube through a coaxial parallel flow nozzle at flow rates of 50 m/sec and 38 m/sec, respectively. Here, the coaxial parallel flow nozzle had an inner tube diameter of 20 mm and the titanium tetrachloride-containing gas was introduced through the inner tube.

The reaction tube had an inside diameter of 100 mm and the flow rate within the reaction tube at a reaction temperature of 1,200°C was 8 m/sec as a calculated value. After the reaction, cooling air was introduced into the reaction tube so that the high-temperature residence time in the reaction tube could be 0.2 second or less. Thereafter, the fine particulate powder produced was collected using a Teflon-made bag filter.

The fine particulates of titanium oxide obtained had a BET specific surface area of 78 $m^2$/g. Furthermore, measurement of the fine particulates of titanium oxide obtained on the particle size distribution by a laser diffraction-type particle size distribution measuring method indicated that the diameter corresponding to 90% of the particle size cumulative distribution on a weight basis as termed D90 diameter was 1.4 μm. The n value according to the Rosin-Rammler formula was 2.1.

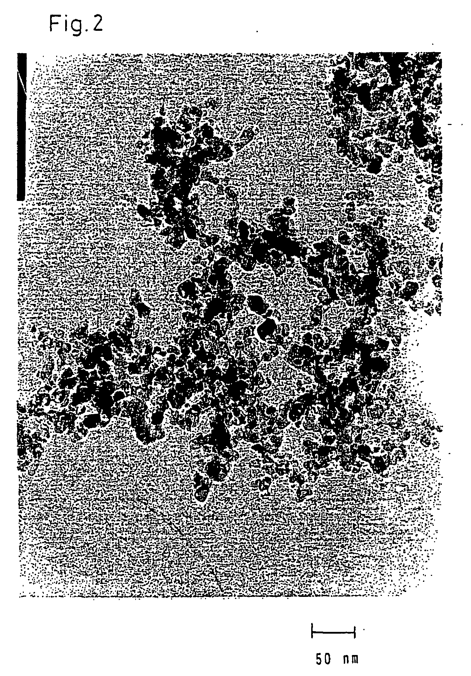

Also, the fine particulates of titanium oxide obtained were examined through a transmission electron microscope (TEM) and, as a result, particles having an aspheric or indefinite shape were observed as shown in the TEM photograph of Fig. 2.

<Example 3>

A titanium tetrachloride-containing gas obtained by mixing 4.7 $Nm^3$/hr of gaseous titanium tetrachloride and 16 $Nm^3$/hr of nitrogen and an oxidizing gas obtained by mixing 20 $Nm^3$/hr of air and 25 $Nm^3$/hr of steam were each preheated to 1,100°C and 1,000°C, respectively, and then introduced into a reaction tube at flow rates of 92 m/sec and 97 m/sec, respectively, through a coaxial parallel flow nozzle. Here, the coaxial parallel flow nozzle had an inner tube diameter of 20 mm and the titanium tetrachloride-containing gas was introduced through the inner tube.

The reaction tube had an inside diameter of 100 mm and the flow rate within the reaction tube at a reaction temperature of 1,250°C was 13 m/sec as a calculated value. After the reaction, cooling air was introduced into the reaction tube so that the high-temperature residence time in the reaction tube would be 0.2 second or less. Thereafter, the fine particulate powder produced was collected using a Teflon-made bag filter.

The fine particulates of titanium oxide obtained had a BET specific surface area of 115 $m^2$/g. Furthermore, measurement of the fine particulates of titanium oxide obtained on the particle size distribution by a laser diffraction-type particle size distribution measuring method indicated that the diameter corresponding to 90% of the particle size cumulative distribution on a weight basis as termed D90 diameter was 2.1 μm. The n value according to the Rosin-Rammler formula was 1.8. <Comparative Example 1>

11.8 $Nm^3$/hr of gaseous titanium tetrachloride in a concentration of 100% and an oxidizing gas obtained by mixing 8 $Nm^3$/hr of oxygen and 20 $Nm^3$/hr of steam were preheated to 400°C and 850°C, respectively, and introduced into a reaction tube at flow rates of 26 m/sec and 40 m/sec, respectively, through a coaxial parallel flow nozzle. Here, the coaxial parallel flow nozzle had an inner tube diameter of 20 mm and the titanium tetrachloride-containing gas was introduced through the inner tube.

The reaction tube had an inside diameter of 100 mm and the flow rate within the reaction tube at a reaction temperature of 680°C was 5.6 m/sec as a calculated value. After the reaction, cooling air was introduced into the reaction tube so that the high-temperature residence time in the reaction tube would be 0.3 second or less. Thereafter, the particulate powder produced was collected using a Teflon-made bag filter.

The particles of titanium oxide obtained had a BET specific surface area of 8 m$^2$/g. Furthermore, measurement of the particles of titanium oxide obtained on the particle size distribution by a laser diffraction-type particle size distribution measuring method indicated that the diameter corresponding to 90% of the particle size cumulative distribution on a weight basis as termed D90 diameter was 11 μm. The n value according to the Rosin-Rammler formula obtained in the same manner as in Example 1 was 1.1.

In comparison with Example 1, both the primary particle size and the secondary particle size were large and the particle size distribution was broad.

<Comparative Example 2>

11.8 Nm$^3$/hr of gaseous titanium tetrachloride in a concentration of 100% and an oxidizing gas obtained by mixing 8 Nm$^3$/hr of oxygen and 20 Nm$^3$/hr of steam were preheated each to 1,000°C and then introduced into a reaction tube at flow rates of 5.4 m/sec and 23 m/sec, respectively, through a coaxial parallel flow nozzle. Here, the coaxial parallel flow nozzle having an inner tube diameter of 60 mm and the titanium tetrachloride-containing gas was introduced through the inner tube.

The reaction tube had an inside diameter of 100 mm and the flow rate within the reaction tube at a reaction temperature of 1,320°C was 10 m/sec as a calculated value. After the reaction, cooling air was introduced into the reaction tube so that the high-temperature residence time in the reaction tube would be 0.3 second or less. Thereafter, the powder produced was collected using a Teflon-made bag filter.

The particles of titanium oxide obtained had a BET specific surface area of 8 m$^2$/g. Furthermore, measurement of the particles of titanium oxide obtained on the particle size distribution by a laser diffraction-type particle size distribution measuring method indicated that the diameter corresponding to 90% of the particle size cumulative distribution on a weight basis as termed D90 diameter was 2.3 μm. The n value according to the Rosin-Rammler formula obtained in the same manner as in Example 1 was 1.6.

In comparison with Example 1, both the primary particle size and the secondary particle size were large and the particle size distribution was broad. <Comparative Example 3>

11.8 Nm$^3$/hr of gaseous titanium tetrachloride in a concentration of 100% and an oxidizing gas obtained by mixing 8 Nm$^3$/hr of oxygen and 20 Nm$^3$/hr of steam were preheated each to 1,000°C and then introduced into a reaction tube through a coaxial parallel flow nozzle at flow rates of 49 m/sec and 32 m/sec, respectively. Here, the coaxial parallel flow nozzle had an inner tube diameter of 20 mm and the titanium tetrachloride-containing gas was introduced through the inner tube.

The reaction tube had an inside diameter of 100 mm and the flow rate within the reaction tube at a reaction temperature of 1,320°C was 14 m/sec as a calculated value. After the reaction, cooling air was introduced into the reaction tube so that the high-temperature residence time in the reaction tube would be 2 seconds. Thereafter, the particulate powder produced was collected using a Teflon-made bag filter.

The particles of titanium oxide obtained had a BET specific surface area of 8 m$^2$/g. Furthermore, measurement of the particles of titanium oxide obtained on the particle size distribution by a laser diffraction-type particle size distribution measuring method indicated that the diameter corresponding to 90% of the particle size cumulative distribution on a weight basis as termed D90 diameter was 1.8 μm. The n value according to the Rosin-Rammler formula obtained in the same manner as in Example 1 was 2.0.

In comparison with Example 1, both the primary particle size and the secondary particle size were large and the particle size distribution was broad.

<Comparative Example 4>

11.8 Nm$^3$/hr of gaseous titanium tetrachloride in a concentration of 100% and an oxidizing gas obtained by mixing 8 Nm$^3$/hr of oxygen and 20 Nm$^3$/hr of steam were preheated each to 1,000°C and then introduced into a reaction tube at flow rates of 49 m/sec and 60 m/sec, respectively, through a coaxial parallel flow nozzle. Here, the coaxial parallel flow nozzle had an inner tube diameter of 20 mm and the titanium tetrachloride-containing gas was introduced through the inner tube.

The reaction tube had an inside diameter of 250 mm and the flow rate within the reaction tube at a reaction temperature of 1,320°C was 1.6 m/sec as a calculated value. After the reaction, cooling air was introduced into the reaction tube so that the high-temperature residence time in the reaction tube would be 0.3 second or less. Thereafter, the particulate powder produced was collected using a Teflon-made bag filter.

The particles of titanium oxide obtained had a BET specific surface area of 9 m$^2$/g. Furthermore, measurement of the particles of titanium oxide obtained on the particle size distribution by a laser diffraction-type particle size distribution measuring method indicated that the diameter corresponding to 90% of the particle size cumulative distribution on a weight basis D90 diameter was 4.2 μm. The n value according to the Rosin-Rammler formula obtained in the same manner as in Example 1 was 1.4.

In comparison with Example 1, both the primary particle size and the secondary particle size were large and the particle size distribution was broad.

<Comparative Example 5>

11.8 Nm$^3$/hr of gaseous titanium tetrachloride in a concentration of 100% and an oxidizing gas obtained by mixing 8 Nm$^3$/hr of oxygen and 20 Nm$^3$/hr of steam were preheated to 400°C and 500°C, respectively, and then introduced into a reaction tube at flow rates of 46 m/sec and 40 m/sec, respectively, through a coaxial parallel flow nozzle. Here, the coaxial parallel flow nozzle had an inner tube diameter of 15 mm and the titanium tetrachloride-containing gas was introduced through the inner tube.

The reaction tube had an inside diameter of 100 mm and the flow rate within the reaction tube at a reaction temperature of 550°C was 5.3 m/sec as a calculated value. After the reaction, cooling air was introduced into the reaction tube so that the high-temperature residence time in the reaction tube would be 0.3 second or less. Thereafter, the particulate powder produced was collected using a Teflon-made bag filter.

The particles of titanium oxide obtained had a BET specific surface area of 7 m$^2$/g. Furthermore, measurement of the particles of titanium oxide obtained on the particle size distribution by a laser diffraction-type particle size distribution measuring method indicated that the diameter corresponding to 90% of the particle size cumulative distribution on a weight basis as D90 diameter was 15 μm. The n value according to the Rosin-Rammler formula obtained in the same manner as in Example 1 was 0.9.

In comparison with Example 1, both the primary particle size and the secondary particle size were large and the particle size distribution was broad.

As described in detail in the foregoing, according to the present invention, in the vapor phase process for producing titanium oxide by oxidizing titanium tetrachloride with an oxidizing gas at a high temperature, the titanium tetrachloride-containing gas and the oxidizing gas are reacted after preheating each gas to 500°C or more, whereby fine particulates of titanium oxide having excellent dispersibility and having a BET specific surface area of from 3 m$^2$/g to 200 m$^2$/g, particularly ultrafine particulates having a BET specific surface area of from 5 m$^2$/g to 200 m$^2$/g, and more preferably from 10 to 200 m$^2$/g can be obtained.

Furthermore, the fine particulates of titanium oxide of the present invention have a narrow particle size distribution and excellent dispersibility in a hydrophilic solvent and, therefore, the step of cracking titanium oxide or the like means can be dispensed with or an extremely small facility may suffice to this purpose. Thus, the present invention has a very great value in the industrial practice.

The invention may be embodied in other specific forms without departing from the spirit or essential characteristics thereof. Therefore, the present embodiment is to be considered in all respects as illustrative and not restrictive, the scope of the invention being indicated by the appended claims rather than by the foregoing description and all changes which come within the meaning and range of equivalency of the claims are therefore intended to be embraced therein.

**Claims**

1. A process of producing titanium oxide by oxidizing titanium tetrachloride with an oxidizing gas at a high temperature in a vapor phase process, **characterized by** comprising the steps of preheating each of a titanium tetrachloride-containing gas and an oxidizing gas to 500°C or more and supplying the preheated gases into a reaction tube, thereby producing fine particulates of titanium oxide having a BET specific surface area of from 3 m$^2$/g to 200 m$^2$/g.

2. The process of producing titanium oxide as claimed in claim 1, wherein the reaction is performed by supplying the titanium tetrachloride-containing gas and the oxidizing gas, each preheated to 500°C or more, to a reaction tube each at a flow rate of 10 m/sec or more.

3. The process of producing titanium oxide as claimed in claim 2, wherein the titanium tetrachloride-containing gas and the oxidizing gas are reacted by allowing them to stay for 3 seconds or less in said reaction tube under a high temperature condition such that the temperature inside said reaction tube exceeds 600°C.

4. The process of producing titanium oxide as claimed in claim 3, wherein each gas passes through said reaction tube at an average flow rate of 5 m/sec or more.

5. The process of producing titanium oxide as claimed in any one of claims 1 to 4, wherein the titanium tetrachloride-containing gas and the oxidizing gas are supplied to generate turbulence in the reaction tube.

6. The process of producing titanium oxide as claimed in any one of claims 1 to 5, wherein the titanium tetrachloride-containing gas and the oxidizing gas are supplied into a reaction tube through a coaxial parallel flow nozzle and the inner tube of said coaxial parallel flow nozzle has an inside diameter of 50 mm or less.

7. The process of producing titanium oxide as claimed in any one of claims 1 to 6, wherein the titanium tetrachloride-containing gas contains from 10 to 100% of titanium tetrachloride.

8. The process of producing titanium oxide as claimed in any one of claims 1 to 7, wherein the titanium tetrachloride-containing gas and the oxidizing gas are each preheated to a temperature of 800°C or more.

9. A titanium oxide **characterized by** having a BET specific surface area of from 3 $m^2$/g to 200 $m^2$/g and a diameter corresponding to 90% of the particle size cumulative distribution on a weight basis as termed D90 diameter, of 2.2 μm or less.

10. A titanium oxide **characterized by** having a BET specific surface area of from 3 $m^2$/g to 200 $m^2$/g and a distribution constant n according to the following Rosin-Rammler formula of 1.7 or more:

$$R = 100\exp(-bD^n)$$

wherein D is a particle diameter and b is a constant.

11. A titanium oxide produced by the process described in any one of claims 1 to 8.

12. A titanium oxide composition comprising at least one titanium oxide selected from the titanium oxides of claims 9 to 11.

Fig.1

TITANIUM TETRACHLORIDE (OR DILUTED WITH NITROGEN)

OXYGEN AND STEAM

2

1

3

4

COOLING AIR

TITANIUM OXIDE

Fig.2

50 nm

## INTERNATIONAL SEARCH REPORT

| | International application No. |
|---|---|
| | PCT/JP00/05794 |

| A. CLASSIFICATION OF SUBJECT MATTER |
|---|
| Int.Cl⁷ C01G23/07 |
| |
| According to International Patent Classification (IPC) or to both national classification and IPC |

**B. FIELDS SEARCHED**

| Minimum documentation searched (classification system followed by classification symbols) |
|---|
| Int.Cl⁷ C01G23/07 |

| Documentation searched other than minimum documentation to the extent that such documents are included in the fields searched |
|---|
| Jitsuyo Shinan Koho 1926-1996 Toroku Jitsuyo Shinan Koho 1994-2000 |
| Kokai Jitsuyo Shinan Koho 1971-2000 Jitsuyo Shinan Toroku Koho 1996-2000 |

| Electronic data base consulted during the international search (name of data base and, where practicable, search terms used) |
|---|
| |

**C. DOCUMENTS CONSIDERED TO BE RELEVANT**

| Category* | Citation of document, with indication, where appropriate, of the relevant passages | Relevant to claim No. |
|---|---|---|
| X | JP, 10-251021, A (Showa Denko K.K.), 22 September, 1998 (22.09.98), Claims; Par. No. [0009]; working example (Family: none) | 1-10 |
| X | US, 5508015, A (E. I. du Pont de Nemours and Company), 16 April, 1996 (16.04.96), Claims; Column 2, lines 3 to 6; working example & JP, 9-511986, A (E. I. du Pont de Nemours and Company), 02 December, 1997 (02.12.97), Claims; page 4, lines 20 to 26; working example & WO, 9602464, A & EP, 771309, A & DE, 69514230, E | 1,7,9-12 |
| A | JP, 10-130022, A (E. I. du Pont de Nemours and Company), 19 May, 1998 (19.05.98), Claims, working example & EP, 826634, A & US, 5759511, A & AU, 9735257, A | 1-10 |
| A | JP, 6-340423, A (Tokuyama Corp.), 13 December, 1994 (13.12.94), claims; working example (Family: none) | 1-10 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 October, 2000 (23.10.00) | 31 October, 2000 (31.10.00) |

| Name and mailing address of the ISA/ | Authorized officer |
|---|---|
| Japanese Patent Office | |
| Facsimile No. | Telephone No. |

Form PCT/ISA/210 (second sheet) (July 1992)